# FASCICULE DE BREVET EUROPEEN

(11) **EP 1 055 079 B1**
(45) Date de publication et mention de la délivrance du brevet: **28.09.2005**
(21) Numéro de dépôt: 99958328.9
(22) Date de dépôt: 15.12.1999
(51) Int. Cl.: F16L 33/00

(54) **ELEMENT TUBULAIRE DE CONDUITE COMPORTANT UNE PARTIE LONGITUDINALE RIGIDE ET UNE PARTIE LONGITUDINALE SOUPLE EN UNE SEULE PIECE**
ROHRFÖRMIGES ELEMENT MIT EINEM STARREN UND EINEM NACHGIEBIGEN QUERTEIL IN EINEM STÜCK FÜR EINE ROHRLEITUNG
PIPE TUBULAR ELEMENT COMPRISING A RIGID LONGITUDINAL PORTION AND A FLEXIBLE LONGITUDINAL PART IN ONE SINGLE PIECE

(30) Priorité: 16.12.1998 FR 9815880
(43) Date de publication de la demande: 29.11.2000
(73) Titulaire: NOBEL PLASTIQUES, 92000 Nanterre (FR)
(72) Inventeur: MILHAS, Pierre, 51300 Vitry-le-françois (FR); JUNG, Stéphane, 51300 Vitry-le-françois (FR)
(74) Mandataire: Robert, Jean-Pierre
(86) Numéro de dépôt international: PCT/FR1999/003140
(87) Numéro de publication internationale: WO 2000/036326

(56) Documents cités:
- DE-A- 3 606 348
- GB-A- 1 354 691
- US-A- 2 473 441

## Description

La présente invention concerne un élément tubulaire de conduite comportant une partie longitudinale rigide et une partie longitudinale souple.

On connaît par exemple de tels éléments formant des éléments tubulaires de jonction de deux conduites thermoplastiques ou d'une conduite thermoplastique à une tétine. Un tel élément est destiné par exemple à être implanté dans le circuit d'arrivée d'essence d'un véhicule automobile pour relier la tétine du réservoir à la conduite raccordée au système d'injection du carburant dans les chambres de combustion du moteur.

Dans une telle application, l'élément de conduite assurant la jonction de la conduite thermoplastique à la tétine du réservoir doit réaliser une jonction étanche, résistante à l'arrachement et relativement flexible afin d'éviter que les efforts et les vibrations auxquels est soumis la jonction lors du fonctionnement du véhicule n'entraînent des fuites voir une rupture de la jonction. En outre, dans le domaine automobile, les cadences d'assemblage sont élevées et la jonction de la conduite à la tétine doit donc être réalisée rapidement sans nécessiter un outillage de mise en oeuvre délicate.

En vue de satisfaire à ces exigences, il est connu d'interposer entre la tétine et la conduite une partie souple formée d'un manchon en élastomère. Pour ce faire, une partie rigide formée d'un embout comprenant une première partie mâle en dents de sapin et une seconde partie mâle coaxiale en forme de tétine est préalablement montée sur la conduite en insérant à force la partie mâle en dents de sapin dans une extrémité de la conduite. En raison des efforts mis en jeu, cette opération ne peut être effectuée manuellement et est réalisée à l'aide d'un outillage dédié à cet effet. La partie mâle en tétine est ensuite emmanchée dans une extrémité du manchon souple et un collier métallique est disposé autour du manchon souple pour serrer celui-ci sur la partie mâle en tétine. La conduite ainsi équipée peut alors être montée sur un véhicule sur la chaîne d'assemblage et être raccordée à la tétine du réservoir ou d'un autre élément du véhicule. Cette opération est effectuée manuellement par un opérateur qui enfile l'extrémité libre du manchon souple sur la tétine de réservoir et serre celui-ci sur la tétine à l'aide d'un collier de serrage. La jonction ainsi réalisée répond de manière satisfaisante aux exigences précédemment citées. Toutefois, la structure de la jonction ainsi réalisée est complexe et nécessite un nombre de pièces relativement élevé (quatre pièces : un embout rigide, un manchon souple et deux colliers de serrage). Ceci implique des opérations d'assemblage onéreuses et complique la gestion des stocks. De plus, la longueur minimale de la jonction correspond sensiblement à la longueur du manchon souple, c'est-à-dire à la somme de la longueur de la tétine du réservoir, de la longueur de la tétine de l'embout et de la distance séparant la tétine du réservoir de la tétine de l'embout. Cette longueur rend difficile l'implantation de la jonction dans les véhicules dans lesquels l'espace disponible pour les composants est de plus en plus réduit. En outre, la jonction est relativement lourde ce qui va à l'encontre de la tendance actuelle rencontrée dans l'automobile où les constructeurs recherchent à réduire le poids des véhicules afin de limiter la consommation de carburant de ceux-ci.

Selon l'invention, on propose un élément de conduite, possédant un axe longitudinal le long duquel s'étendent consécutivement une partie rigide et une partie souple tubulaires et en une seule pièce, la partie rigide comportant une extrémité présentant une surface sensiblement radiale de liaison à une portion extrême de la partie souple et, au niveau de la surface radiale de liaison, des moyens pour définir une surface supplémentaire de liaison à la portion extrême de la partie souple, au moins une partie de la surface supplémentaire de liaison s'étendant de manière sensiblement parallèle à l'axe longitudinal. les moyens pour définir une surface supplémentaire de liaison comprennent des lamelles s'étendant de façon sensiblement parallèle à l'axe longitudinal de l'élément de conduite, les lamelles étant noyées dans la portion extrême de la partie souple et renforçant selon une direction radiale ladite partie souple.

Les moyens pour définir une surface supplémentaire de liaison permettent le renforcement de la liaison entre la partie rigide et la partie souple tant à des efforts d'arrachement parallèles à l'axe longitudinal qu'à des efforts transversaux de flexion, la résistance à ces efforts étant en particulier améliorée par la partie de la surface supplémentaire de contact s'étendant de manière sensiblement parallèle à l'axe longitudinal de l'élément de conduite. L'élément de conduite est en outre de structure simple, peu encombrante et relativement légère. L'élément de conduite peut de plus être réalisé en injection bi-matière de sorte qu'il est peu coûteux.

Les lamelles permettent alors d'augmenter la résistance de la partie souple à la pression du fluide circulant dans le circuit dans lequel est implanté l'élément de conduite tout en conservant une flexibilité suffisante de la partie souple.

Selon une application particulière, l'élément de conduite forme un élément tubulaire de jonction d'une conduite thermoplastique à une tétine, la partie rigide comportant une portion mâle pourvue de redans externes pour être introduite dans la conduite et un épaulement solidaire de ladite extrémité de la partie rigide présentant à l'opposé de la portion mâle, une surface formant la surface radiale de liaison à la partie souple, la partie souple étant formée d'un manchon souple destiné à recevoir la tétine d'un côté opposé à la partie rigide. Il est ainsi possible de limiter le nombre de pièces nécessaires à une jonction d'une conduite à une tétine, qui se limite à un élément tubulaire de jonction et éventuellement à un collier de serrage permettant la fixation de la tétine dans le manchon souple. Le poids de la jonction réalisée de la sorte est également limité. La longueur de la jonction correspond alors à la longueur de la tétine à laquelle s'ajoute la distance séparant la tétine de la partie rigide de l'élément tubulaire de jonction. La jonction présente donc une longueur relativement faible.

Selon une caractéristique particulière, le manchon souple présente extérieurement au moins un repère en relief pour le positionnement d'un collier de serrage, le repère étant par exemple une gorge ou un bourrelet annulaire. Le repère de positionnement permet à l'opérateur chargé du montage du manchon souple sur la tétine de disposer précisément le collier de serrage sur la portion du manchon s'étendant autour de la tétine.

D'autres caractéristiques et avantages de l'invention ressortiront à la lecture de la description qui suit de modes de réalisation particuliers non limitatifs de l'invention.

Il sera fait référence aux dessins annexés, parmi lesquels :
- la figure 1 est une vue en demi-coupe longitudinale d'un élément de conduite formant un élément tubulaire de jonction d'une conduite à une tétine, selon un premier mode de réalisation de l'invention,
- la figure 2 est une vue analogue à la figure 1 d'un élément tubulaire de jonction selon un deuxième mode de réalisation,
- la figure 3 est une vue analogue à la figure 1 d'un élément tubulaire de jonction selon un troisième mode de réalisation,
- la figure 4 est une vue en bout de la partie rigide de l'élément tubulaire de jonction selon le troisième mode de réalisation,
- la figure 5 est une vue en coupe longitudinale de la partie rigide selon ce troisième mode de réalisation,
- les figures 6 et 7 sont des vues en élévation, avec écorché, d'un élément tubulaire de jonction selon des variantes de réalisation, le manchon souple étant pourvu intérieurement d'un diaphragme,
- la figure 8 est une vue analogue à la figure 1 d'un élément de conduite selon un quatrième mode de réalisation, l'élément de conduite raccordant l'une à l'autre deux conduites en matériau thermoplastique,
- les figures 9 et 10 sont des vues analogues à la figure 1 de variantes de réalisation d'une des parties rigides de l'élément de conduite selon le quatrième mode de réalisation.

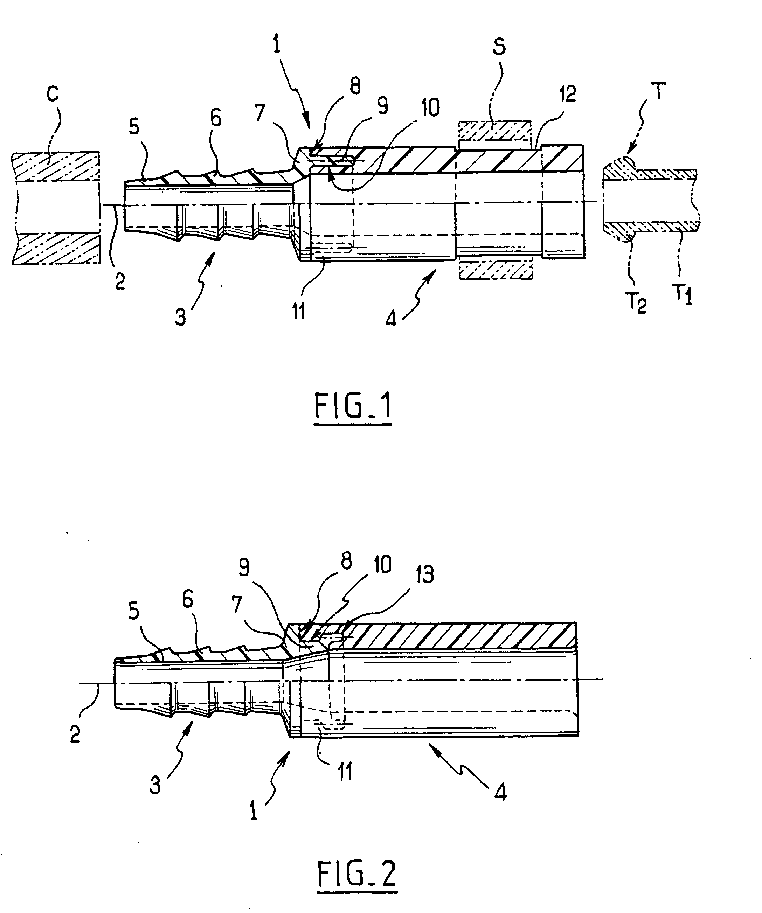

En référence aux figures 1 à 3, l'élément de conduite selon les trois premiers modes de réalisation de l'invention forme un élément tubulaire de jonction généralement désigné en 1, destiné à permettre le raccordement d'une conduite C en matériau thermoplastique à une tétine T également en matériau thermoplastique et comportant de manière connue en soi une partie cylindrique tubulaire T1 ayant une extrémité libre muni d'un bourrelet externe T2. La conduite C et la tétine T sont représentées à la figure 1 en traits mixtes doubles.

L'élément tubulaire de jonction 1 a un axe longitudinal 2 le long duquel s'étendent consécutivement une partie rigide 3 et un manchon souple 4 coaxial à la partie rigide 3 et en une seule pièce avec celle-ci.

La partie rigide 3 est tubulaire et comprend une portion mâle 5 présentant extérieurement des redans annulaires 6 de type dents de sapin. La portion mâle est destinée à être introduite dans la conduite C. La partie rigide 3 est ici représentée droite mais pourrait bien entendu être coudée.

Une extrémité 7 de la partie rigide 3 opposée à l'extrémité par laquelle la portion mâle 5 est destinée à être introduite dans la conduite C forme un épaulement. L'épaulement 7 présente à l'opposé de la portion mâle 5 une surface radiale 8 coopérant étroitement avec une portion extrême 11 du manchon souple 4 pour former une surface radiale de liaison de la partie rigide 3 au manchon souple 4.

La partie rigide 3 comprend également, au niveau de la surface radiale de liaison 8, des moyens 9 pour définir une surface supplémentaire 10 coopérant étroitement avec la portion extrême 11 du manchon souple 4 pour former une surface supplémentaire de liaison. Au moins une partie de la surface supplémentaire de liaison 10 s'étend parallèlement à l'axe longitudinal 2.

Le manchon souple 4 est destiné à recevoir la tétine T du côté opposé à la portion extrême 11 et à la partie rigide 3. Le manchon souple 4 est représenté droit aux figures mais pourrait bien entendu être coudé.

L'élément tubulaire de jonction est ici réalisé par un procédé d'injection bi-matière. La partie rigide 3 est par exemple en polyamide modifié pour la mise en oeuvre de ce procédé et le manchon souple est en élastomère tel qu'un caoutchouc nitrile carboxyle (XNBR) de manière à réaliser une liaison chimique entre le polyamide de la partie rigide 3 et l'élastomère du manchon souple 4 au niveau de la surface radiale de liaison 8 et de la surface supplémentaire de liaison 10. D'autres procédés de réalisation permettant l'obtention d'une liaison de la partie rigide 3 à la portion extrême 11 au niveau des surfaces de liaison 8, 10 peuvent être utilisés, comme par exemple un procédé d'injection avec application préalable d'un agent d'adhérence sur la partie rigide. D'autres matériaux pourront également être employés pour la partie rigide et le manchon souple et en particulier pour ce dernier un caoutchouc fluoro-carboné (FPM) ou un caoutchouc nitrile hydrogéné (HNBR).

Différents modes de réalisation de l'élément tubulaire de jonction et plus particulièrement des moyens pour définir la surface supplémentaire de liaison 10 vont maintenant être décrits en relation avec les figures 1 à 3. Les éléments identiques ou analogues à ceux précédemment décrits porteront dans la description de ces modes de réalisation une référence numérique identique.

En référence à la figure 1, la surface supplémentaire de liaison 10 est définie par la surface d'une couronne 9 s'étendant en saillie de la surface radiale de liaison 8. La couronne 9 a un axe central correspondant à l'axe longitudinal 2 et a ici une dimension de 5 mm, parallèlement à l'axe central.

La couronne 9 est noyée dans la matière constituant la portion extrême 11 du manchon souple 4.

Une gorge 12 s'étend extérieurement autour du manchon souple 4. La gorge 12 est réalisée lors de l'injection du manchon souple 4.

Lorsque la tétine T est insérée dans le manchon souple 4, l'extrémité libre T2 de la tétine T s'étend à distance du bord libre de la couronne 9 de manière que la jonction conserve une certaine flexibilité. Lorsque la tétine T est ainsi positionnée, la gorge 12 s'étend au niveau de la partie cylindrique T1 de la tétine.

Un collier de serrage S, représenté,avant fixation à la figure 1 en traits mixtes doubles, disposé dans la gorge 12, s'étend alors dans une position idéale pour assurer un assujettissement efficace du manchon souple 4 sur la tétine T.

En référence à la figure 2, les moyens pour définir la surface supplémentaire de liaison 10 sont formés d'une couronne 9, d'axe central correspondant à l'axe longitudinal 2, partiellement noyée dans la matière formant la portion extrême 11 du manchon souple 4 de telle sorte que la surface supplémentaire de liaison 10 est formée par la surface externe de la couronne 9.

La couronne 9 a un bord libre 13 formant un redan externe en saillie radiale dans la portion extrême 11. Ce redan renforce la liaison de la partie rigide 3 au manchon souple 4 en formant un obstacle s'opposant à l'arrachement de la partie rigide 3 du manchon 4. Une liaison mécanique est ainsi formée entre la partie rigide 3 et le manchon souple 4.

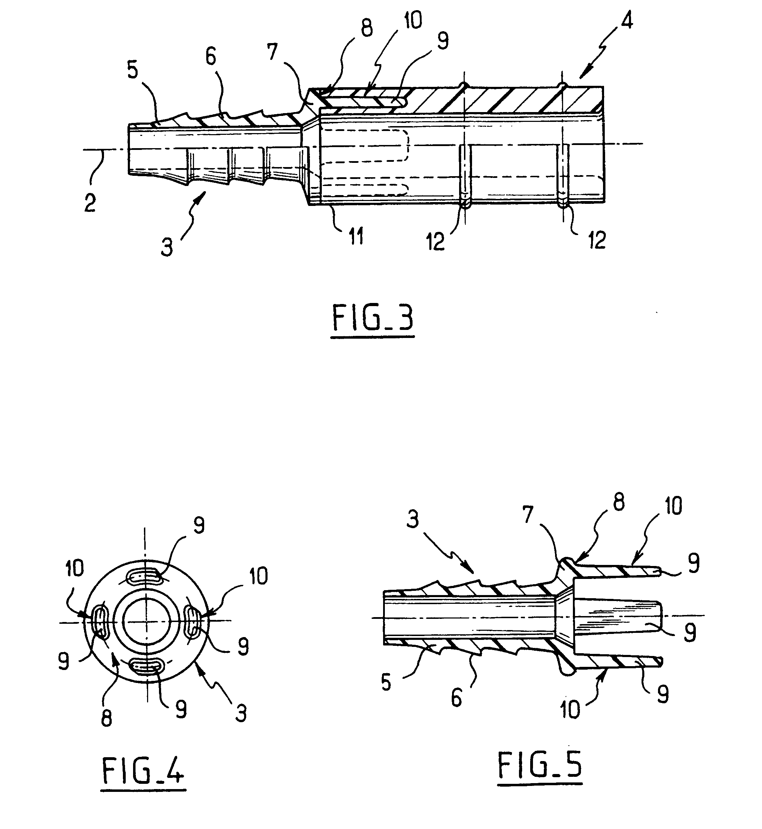

En référence aux figures 3 à 5, la surface supplémentaire de liaison 10 est formée par l'enveloppe superficielle de lamelles 9 parallèles à l'axe longitudinal 2 et noyées dans la matière constituant la portion extrême 11 du manchon souple 4. Les lamelles renforcent transversalement la portion extrême 11 du manchon souple 4. Lorsque la tétine T est reçue dans le manchon souple 4, le bourrelet T2 s'étend à distance de l'extrémité libre des lamelles. Les lamelles permettent ainsi d'augmenter la résistance de la portion extrême 11 à la pression du fluide circulant dans le circuit dans lequel est implanté l'élément tubulaire de jonction et de l'adapter aux propriétés pression/température de ce fluide.

Il est ici représenté quatre lamelles 9 disposées symétriquement à 90° les unes des autres, étant entendu qu'un nombre différent de lamelles et/ou une disposition asymétrique de celles-ci peuvent être envisagés pour adapter l'élément tubulaire de jonction à des contraintes de résistance ou de flexibilité particulières. Des redans externes pourront également être prévus sur les lamelles 9 pour saillir dans la matière de la portion extrême 11 de façon à s'opposer à un arrachement de la partie rigide 3.

Deux bourrelets annulaires s'étendent parallèlement autour de la surface externe du manchon souple 4 et forment des repères de positionnement d'un collier de serrage.

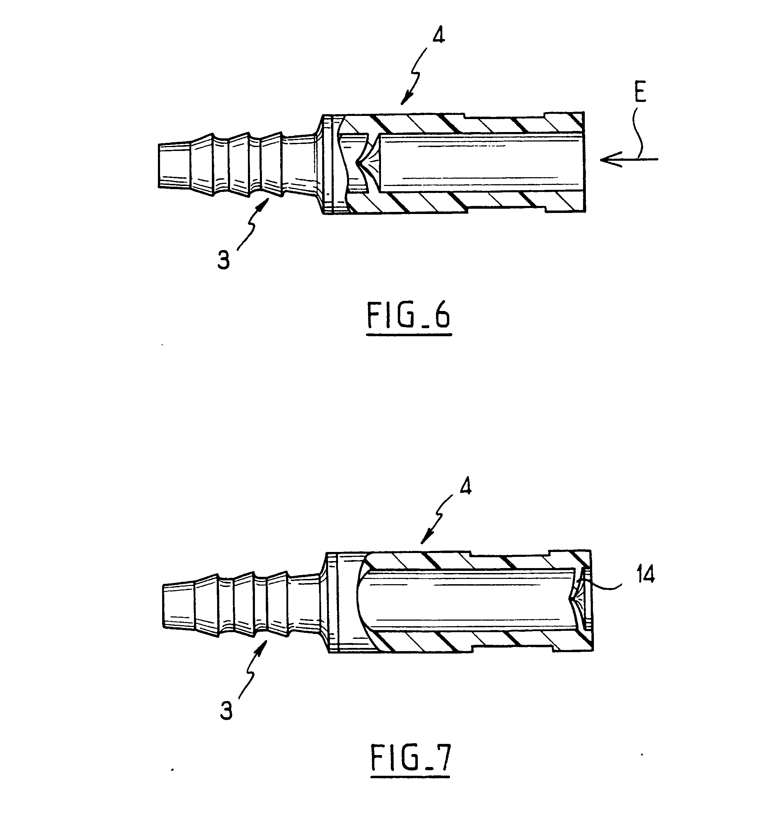

En variante, et de manière particulièrement avantageuse, le manchon souple 4 est pourvu intérieurement d'un diaphragme représenté en 14 aux figures 6 et 7.

Le diaphragme 14 s'étend transversalement dans le manchon souple 4 et est ici réalisé en une seule pièce avec le manchon souple lors de l'injection de celui-ci. Le diaphragme 14 est réalisé en XNBR (ou dans un autre caoutchouc tel que ceux cités précédemment) pour être déformable entre un état de repos (représenté aux figures 6 et 7) dans lequel le diaphragme 14 obture le manchon souple 4 et un état de déformation dans lequel le diaphragme 14 délimite un orifice.

A la figure 6, le diaphragme 14 s'étend de façon adjacente à la partie rigide 3 de manière qu'une fois l'élément de jonction 1 relié au circuit, le diaphragme soit amené dans son état de déformation par le fluide circulant dans le manchon 4 selon la direction E et dans son état de repos dès que le fluide circule dans la direction opposée, le diaphragme obturant alors le manchon souple pour former un clapet anti-retour.

A la figure 7, le diaphragme 14 s'étend du côté du manchon souple 4 opposé à la partie rigide 3 de manière que, lors de l'introduction de la tétine T dans le manchon souple 4, la tétine déforme le diaphragme 14 et débouche le conduit du manchon, la déformation pouvant aller au-delà de la limite élastique du diaphragme 14.

Le diaphragme assure une fonction d'operculage du manchon pour empêcher que des particules ne s'introduisent dans la conduite avant raccordement de celle-ci à la tétine. Cette fonction est intéressante notamment dans le cas où l'élément tubulaire de jonction 1 est destiné à être implanté dans le circuit d'arrivée du carburant d'un véhicule, de telles particules risquant de venir boucher les injecteurs du circuit de carburant. Aux lieu et place d'un diaphragme, on pourrait prévoir une simple membrane déchirable.

Le manchon 4 peut également présenter un relief intérieur formant redan, de préférence réalisé en une seule pièce avec le manchon, constituant un obstacle s'opposant à l'arrachement de la tétine hors du manchon. Le manchon 4 peut en outre comporter une lèvre annulaire intérieure faisant office de joint à lèvre et renforçant l'étanchéité de la jonction.

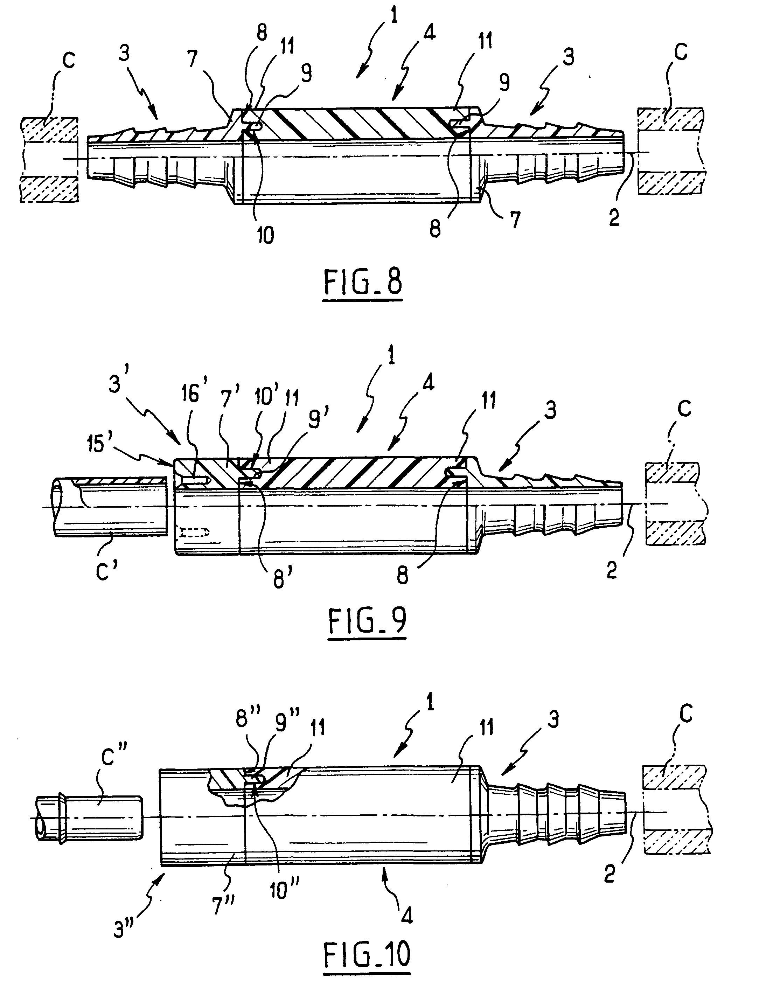

En référence aux figures 8 à 10, l'élément de conduite selon le quatrième mode de réalisation, généralement désigné en 1, est destiné à permettre le raccordement l'une à l'autre de deux conduites en matériau thermoplastique (conduites C à la figure 8, C et C' à la figure 9, C et C" à la figure 10).

Comme dans les modes de réalisation précédents, l'élément de conduite 1 a un axe longitudinal 2, une partie rigide 3 comportant une portion mâle 5 et un épaulement 7 présentant une surface radiale 8 de liaison à une portion extrême 11 d'une partie souple formée d'un manchon 4, et des moyens 9, ici une couronne, délimitant une surface supplémentaire de liaison 10 dont une partie s'étend parallèlement à l'axe longitudinal 2.

Dans ce quatrième mode de réalisation, l'élément de conduite 1 comprend une seconde partie rigide solidaire d'une seconde portion extrême 11 du manchon 4 s'étendant à l'opposé de la première portion extrême 11 citée ci-dessus.

La seconde partie rigide est ici réalisée en une seule pièce avec le manchon 4 et la première partie rigide 3 selon le procédé mentionné précédemment.

A la figure 8, la seconde partie rigide est référencée 3 et est identique à celle précédemment décrite.

A la figure 9, la seconde partie rigide porte la référence 3' et comprend une rainure circulaire 16' qui s'étend sur une face d'extrémité 15' de la partie rigide 3' et est centrée sur l'axe longitudinal 2. La rainure 16' a des dimensions transversales correspondant à celles de la conduite C' de manière que la conduite C' puisse être reçue dans la rainure 16' et y être soudée par rotation. D'autres formes adaptées au soudage en rotation peuvent être utilisées.

La partie rigide 3' comprend une extrémité 7' opposée à la face d'extrémité 15' et qui présente une surface radiale de liaison 8' à la portion extrême 11 concernée du manchon 4.

Une couronne 9' coaxiale s'étend au niveau de la surface radiale de liaison 8'. La couronne 9' est noyée dans la portion extrême 11 concernée du manchon 4 et définit une surface supplémentaire de liaison 10' à la portion extrême 11 concernée. Une partie de la surface supplémentaire de liaison 10' s'étend parallèlement à l'axe longitudinal 2.

A la figure 10, la seconde partie rigide porte la référence 3" et comprend des moyens d'encliquetage de type connu destinés à coopérer avec un redan de la conduite C".

La partie rigide 3" comprend une extrémité 7" présentant une surface radiale 8" de liaison à la portion extrême 11 concernée du manchon 4.

Une couronne 9" s'étend à partir de la surface radiale 8" parallèlement à l'axe longitudinal 2. La couronne 9" est noyée dans la portion extrême 11 concernée et définit une surface supplémentaire de liaison 10" dont une partie s'étend parallèlement à l'axe longitudinal 2.

Bien entendu l'invention n'est pas limitée aux modes de réalisation décrits et on peut y apporter des variantes de réalisation sans sortir du cadre de l'invention tel que défini par les revendications.

## Revendications

1. Elément de conduite, possédant un axe longitudinal (2) le long duquel s'étendent consécutivement au moins une partie rigide (3) et une partie souple (4) tubulaires, la partie rigide (3) et la partie souple (4) étant en une seule pièce, la partie rigide ayant une extrémité (7) présentant une surface sensiblement radiale (8) de liaison à une portion extrême (11) de la partie souple (4), et la partie rigide (3) comportant au niveau de la surface radiale de liaison (8) des moyens (9) pour définir au moins de manière sensiblement parallèle à l'axe longitudinal (2) une surface supplémentaire (10) de liaison à la portion extrême (11) de la partie souple (4), **caractérise en ce que** ces moyens comprennent des lamelles (9) s'étendant de façon sensiblement parallèle à l'axe longitudinal (2) de l'élément de conduite (1), les lamelles étant noyées dans la portion extrême (11) de la partie souple (4) et renforçant selon une direction radiale ladite partie souple.

2. Elément de conduite selon la revendication 1, **caractérisé en ce que** la partie rigide (3) comporte une portion mâle (5) pourvue de redans externes (6) pour être introduite dans une conduite thermoplastique et un épaulement solidaire de ladite extrémité (7) de la partie rigide (3) présentant à l'opposé de la portion mâle (5) une surface formant la surface radiale (8) de liaison à la portion extrême (11) de la partie souple, la partie souple étant formée d'un manchon souple (4) destiné à recevoir une tétine d'un côté opposé à ladite portion extrême (11).

3. Elément de conduite selon la revendication 2, **caractérisé en ce que** le manchon souple (4) présente extérieurement au moins un repère (12) en relief pour le positionnement d'un collier de serrage.

4. Elément de conduite selon la revendication 3, **caractérisé en ce que** le repère est une gorge (12).

5. Elément de conduite selon la revendication 3, **caractérisé en ce que** le repère est un bourrelet annulaire (12).

6. Elément de conduite selon l'une des revendications précédentes, **caractérisé en ce qu'**il comprend un diaphragme (14) s'étendant transversalement à l'intérieur de la partie souple (4), le diaphragme étant déformable entre un état de repos dans lequel il obture la partie souple et un état de déformation dans lequel il délimite une ouverture.

7. Elément de conduite selon la revendication 6, **caractérisé en ce que** le diaphragme (14) est adjacent à la partie rigide (3) et est agencé pour être amené dans son état de déformation par un fluide circulant dans l'élément de conduite selon un sens déterminé (E) et dans son état de repos lorsque le fluide circule dans le sens opposé.

8. Elément de conduite selon la revendication 7, **caractérisé en ce que** le diaphragme (14) s'étend à l'opposé de la partie rigide (3) de façon à être amené dans son état de déformation par une tétine lors de l'introduction de celle-ci dans la partie souple.

## Patentansprüche

1. Leitungselement mit einer Längsachse (2), entlang der sich aufeinanderfolgend zumindest ein starrer rohrförmiger Abschnitt (3) und ein flexibler rohrförmiger Abschnitt (4) erstrecken, wobei der starre Abschnitt (3) und der flexible Abschnitt (4) einstückig miteinander ausgebildet sind, und wobei der starre Abschnitt eine Ende (7) hat, das eine im wesentlichen radiale Fläche (8) zum Verbinden mit einem Endabschnitt (11) des flexiblen Abschnitts (4) hat, und wobei der starre Abschnitt (3) im Bereich der radialen Verbindungsfläche (8) Mittel (9) hat, die zumindest im wesentlichen parallel zur Längsachse (2) eine zusätzliche Fläche (10) zum Verbinden mit dem Endabschnitt (11) des flexiblen Abschnitts (4) bilden, **dadurch gekennzeichnet, dass** die Mittel Lamellen (9) umfassen, die sich im wesentlichen parallel zur Längsachse (2) des Leitungselements (1) erstrecken, wobei die Lamellen in den Endabschnitt (11) des flexiblen Abschnitts (4) eingebettet sind und den flexiblen Abschnitt in radialer Richtung verstärken.

2. Leitungselement nach Anspruch 1, **dadurch gekennzeichnet, dass** der starre Abschnitt (3) einen mit äußeren Stufen (6) versehenen aufzunehmenden Abschnitt (5) zum Einführen in die thermoplastische Leitung und eine einstückig mit dem Ende (7) des starren Abschnitts (3) ausgebildete Schulter umfasst, die auf der vom aufzunehmenden Abschnitt (5) abgewandten Seite eine Fläche hat, welche die radiale Fläche (8) zum Verbinden mit dem Endabschnitt (11) des flexiblen Abschnitts (4) bildet, wobei der flexible Abschnitt aus einer flexiblen Hülse (4) gebildet ist, die dazu vorgesehen ist, einen Rohrstutzen auf der vom Endabschnitt (11) abgewandten Seite aufzunehmen.

3. Leitungselement nach Anspruch 2, **dadurch gekennzeichnet, dass** der flexible Abschnitt (4) an seiner Außenseite zumindest eine reliefförmige Markierung zum Positionieren einer Spannschelle hat.

4. Leitungselement nach Anspruch 3, **dadurch gekennzeichnet, dass** die Markierung eine Nut (12) ist.

5. Leitungselement nach Anspruch 3, **dadurch gekennzeichnet, dass** die Markierung ein ringförmiger Wulst (12) ist.

6. Leitungselement nach einem der vorhergehenden Ansprüche, **dadurch gekennzeichnet, dass** es eine Membran (14) umfasst, die sich quer zum Innern des flexiblen Abschnitts (4) erstreckt, wobei die Membran verformbar ist von einem Ruhezustand, in dem sie den flexiblen Abschnitt verschließt, in einen verformten Zustand, in dem sie eine Öffnung freigibt.

7. Leitungselement nach Anspruch 6, **dadurch gekennzeichnet, dass** die Membran (14) dem starren Abschnitt (3) benachbart und derart angeordnet ist, dass sie durch ein Fluid, das in dem Leitungselement in eine bestimmte Richtung (E) fließt, in den verformten Zustand und in den Ruhezustand gebracht werden kann, wenn das Fluid in die entgegengesetzte Richtung fließt.

8. Leitungselement nach Anspruch 7, **dadurch gekennzeichnet, dass** die Membran (14) sich auf der vom starren Abschnitt (3) fernen Seite derart erstreckt, dass sie durch einen Rohrstutzen bei dessen Einführen in den flexiblen Abschnitt in den verformten Zustand gebracht wird.

## Claims

1. A pipe element possessing a longitudinal axis (2) along which there extend in succession at least a flexible tubular part (4) and a rigid tubular part (3), the rigid part (3) and the flexible part (4) constituting a single piece, the rigid part having an end (7) presenting a substantially radial connection surface (8) for connection with an end portion (11) of the flexible part (4), and the rigid part (3) having means (9) on the radial connection surface (8) for defining an additional connection surface (10) that is at least substantially parallel to the longitudinal axis (2) and for connection to the end portion (11) of the flexible part (4), the element being **characterized in that** said means comprise tongues (9) extending substantially parallel to the longitudinal axis (2) of the pipe element (1), the tongues being embedded in the end portion (11) of the flexible part (4) and reinforcing said flexible part in a radial direction.

2. A pipe element according to claim 1, **characterized in that** the rigid part (3) having a male portion (5) provided with external ridges (6) for insertion into a thermoplastic pipe and a shoulder secured to said end (7) of the rigid part (3) and presenting on its side opposite from the male portion (5) a surface that forms the radial connection surface (8) for connection to the end portion (11) of the flexible part, the flexible part being constituted by a flexible sleeve (4) for receiving a nipple via its end opposite from said end portion (11).

3. A pipe element according to claim 2, **characterized in that** the flexible sleeve (4) presents at least one mark (12) in relief on its outside for positioning a clamping collar.

4. A pipe element according to claim 3, **characterized in that** the mark is a groove (12).

5. A pipe element according to claim 3, **characterized in that** the mark is an annular bead (12).

6. A pipe element according to any preceding claim, **characterized in that** it includes a diaphragm (14) extending across the inside of the flexible part (4), the diaphragm being deformable between a rest state in which it closes the flexible part and a deformed state in which it defines an opening.

7. A pipe element according to claim 6, **characterized in that** the diaphragm (14) is adjacent to the rigid part (3) and is arranged to be moved into its deformed state by a fluid flowing in the pipe element in a determined direction (E), and into its rest state when the fluid flows in the opposite direction.

8. A pipe element according to claim 7, **characterized in that** the diaphragm (14) extends remote from the rigid part (3) so as to be moved into its deformed state by a nipple when the nipple is inserted into the flexible part.
